(19) Europäisches Patentamt
European Patent Office
Office européen des brevets

(11) **EP 3 876 150 A2**

(12) **EUROPEAN PATENT APPLICATION**

(43) Date of publication:
**08.09.2021 Bulletin 2021/36**

(51) Int Cl.:
***G06K 9/00*** *(2006.01)*

(21) Application number: **21185937.6**

(22) Date of filing: **15.07.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020 CN 202011384131**

(71) Applicant: **Beijing Baidu Netcom Science and
Technology Co., Ltd.
Beijing 100085 (CN)**

(72) Inventors:
• **ZHANG, Wei
  Beijing 100085 (CN)**
• **TAN, Xiao
  Beijing 100085 (CN)**
• **SUN, Hao
  Beijing 100085 (CN)**
• **DING, Errui
  Beijing 100085 (CN)**

(74) Representative: **Studio Torta S.p.A.
Via Viotti, 9
10121 Torino (IT)**

(54) **VEHICLE TRACKING METHOD AND APPARATUS**

(57)    The present application provides a vehicle tracking method, apparatus, and electronic device, and relates to the technical field of computer vision and deep learning. The specific implementation is: identifying first position information of a first vehicle in a first image of a video stream collected during driving of vehicles; and identifying second position information of a second vehicle in a second image of the video stream; wherein, the first image is the previous N frame images adjacent to the second image in the video stream, and N is a positive integer; predicting first position offset information of the second vehicle relative to the first vehicle on the basis of the first image and the second image; determining a tracking result of the second vehicle on the basis of the first position information, the second position information and the first position offset information. The technology according to the present application solves the problem of relatively low vehicle tracking accuracy in the vehicle tracking technology, and improves the vehicle tracking accuracy.

```
                                                           ┌─ 101
┌──────────────────────────────────────────────────┐
│ Identifying first position information of a first   │
│ vehicle in a first image of a video stream          │
│ collected during driving of vehicles;               │
│ and identifying second position information of a    │
│ second vehicle in a second image of the video       │
│ stream                                              │
└──────────────────────────────────────────────────┘
                         │
                         ▼                             ┌─ 102
┌──────────────────────────────────────────────────┐
│ Predicting first position offset information of the │
│ second vehicle relative to the first vehicle on the │
│ basis of the first image and the second image       │
└──────────────────────────────────────────────────┘
                         │
                         ▼                             ┌─ 103
┌──────────────────────────────────────────────────┐
│ Determining a tracking result of the second        │
│ vehicle on the basis of the first position          │
│ information, the second position information and    │
│ the first position offset information               │
└──────────────────────────────────────────────────┘
```

Fig. 1

**EP 3 876 150 A2**

## Description

### TECHNICAL FIELD

The present application relates to the field of artificial intelligence, in particular to the technical field of computer vision and deep learning, and specifically to a vehicle tracking method, apparatus and electronic device.

### BACKGROUND

Structural analysis of a road traffic video, identification of a vehicle in an image, and tracking the vehicle are important technical capabilities for intelligent traffic visual perception.

In related technologies, vehicle tracking technology is mainly divided into two stages. In a first stage, an instance segmentation model is usually used to perform instance segmentation on the image frame, and the detection frame or segmentation mask contained in the image frame is determined; in a second stage, feature extraction is performed on the detection frame or segmentation mask, a feature of the vehicle are determined, and the vehicle is tracked according to the matching degree between the feature of the vehicle in the current image frame and a feature of vehicle in a history image frame.

### SUMMARY

The present disclosure provides a vehicle tracking method, apparatus, and electronic device.

According to a first aspect of the present disclosure, a vehicle tracking method is provided, including:

identifying first position information of a first vehicle in a first image of a video stream collected during driving of vehicles; and identifying second position information of a second vehicle in a second image of the video stream; wherein, the first image is the previous N frame images adjacent to the second image in the video stream, N is a positive integer;
predicting first position offset information of the second vehicle relative to the first vehicle on the basis of the first image and the second image;
determining a tracking result of the second vehicle on the basis of the first position information, the second position information, and the first position offset information.

According to a second aspect of the present disclosure, a vehicle tracking apparatus is provided, including:

a first identifying module configured to identify first position information of a first vehicle in a first image of a video stream collected during driving of vehicles, and second position information of a second vehicle in a second image of the video stream; wherein, the first image is the previous N frame images adjacent to the second image in the video stream, and N is a positive integer;
a predicting module configured to predict first position offset information of the second vehicle relative to the first vehicle on the basis of the first image and the second image;
a first determining module configured to determine a tracking result of the second vehicle on the basis of the first position information, the second position information, and the first position offset information.

According to a third aspect of the present disclosure, an electronic device is provided, including:

at least one processor; and
a memory communicatively connected with the at least one processor; where,
the memory stores instructions executable by the at least one processor, and the instructions are executed by the at least one processor, so that the at least one processor can execute the method according to any one of the first aspect.

According to a fourth aspect of the present disclosure, a computer-readable storage medium is provided, and the computer-readable storage medium stores computer instructions causing the computer to execute the method according to any one of the first aspect.

The technology according to the present application solves the problem of relatively low vehicle tracking accuracy in the vehicle tracking technology, and improves the vehicle tracking accuracy. It should be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution, and do not constitute a limitation to the present application. Among them:

FIG. 1 is a schematic flowchart of a vehicle tracking method according to a first embodiment of the present application;
FIG. 2 is a schematic diagram of marking each second vehicle in the second image;
FIG. 3 is a schematic diagram of the implementation framework of the vehicle tracking method;
FIG. 4 is a schematic diagram of the structure of an encoder network with attention mechanism;
FIG. 5 is a schematic structural diagram of a vehicle tracking apparatus according to a second embodiment of the present application;

FIG. 6 is a block diagram of an electronic device used to implement the vehicle tracking method according to an embodiment of the present application.

## DETAILED DESCRIPTION

The following describes exemplary embodiments of the present application with reference to the accompanying drawings, which include various details of the embodiments of the present application to facilitate understanding, and should be regarded as merely exemplary. Therefore, those of ordinary skill in the art should recognize that various changes and modifications can be made to the embodiments described herein without departing from the scope and spirit of the present application. Likewise, for clarity and conciseness, descriptions of well-known functions and structures are omitted in the following description.

First Embodiment

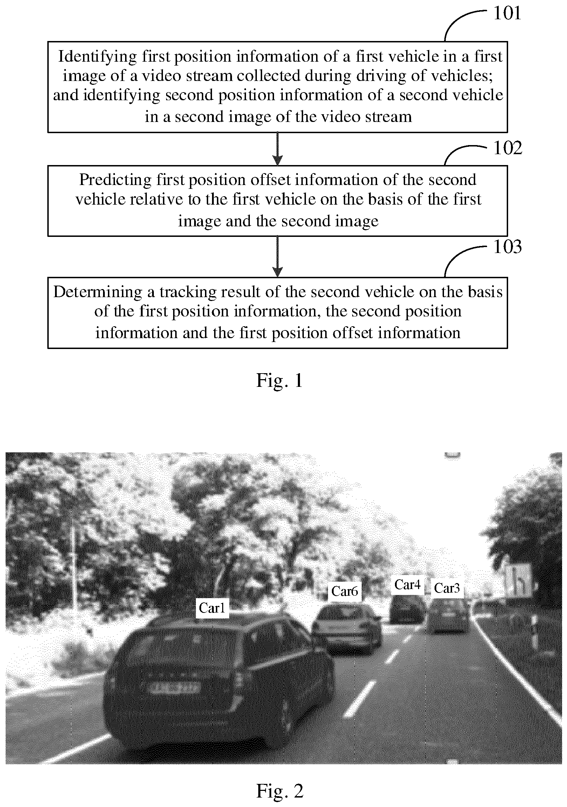

As shown in FIG. 1, the present application provides a vehicle tracking method, including the following steps:

Step101: identifying first position information of a first vehicle in a first image of a video stream collected during driving of vehicles; and identifying second position information of a second vehicle in a second image of the video stream; wherein, the first image is the previous N frame images adjacent to the second image in the video stream, and N is a positive integer;

In the embodiment of the present application, the vehicle tracking method involves computer vision, deep learning, and other artificial intelligence technology fields, which can be widely used in many scenarios such as vehicle monitoring, violation recognition, and traffic flow statistics.

In actual use, the vehicle tracking method of the embodiment of the present application may be executed by the vehicle tracking apparatus of the embodiment of the present application. In actual use, the vehicle tracking apparatus of the embodiment of the present application may be configured in any electronic device to execute the vehicle tracking method of the embodiment of the present application. The electronic device may be a server or a terminal, which is not specifically limited here.

For example, the vehicle tracking apparatus of the embodiment of the present application may be configured in a vehicle (such as an autonomous vehicle) to track the vehicle on the road in which the vehicle is running, so as to visually perceive the surrounding environment of the vehicle and improve the safety of the vehicle running; or, the vehicle tracking apparatus of the embodiment of the present application can also be configured in a server of a traffic management system, and is used for violation recognition, traffic flow statistics etc. at the traffic monitoring intersection.

The vehicle tracking method of the embodiment of the present application can be applied to a real-time vehicle tracking scene, and can also be applied to a non-real-time vehicle tracking scene, which is not specifically limited here.

When applied to a real-time vehicle tracking scenario, the acquisition path of the video stream in the embodiment of the present application is related to the application scenario of the vehicle tracking method in the embodiment of the present application. For example, when the vehicle tracking method of the embodiment of the present application is applied in the fields of automatic driving and assisted driving, the processor in the vehicle may establish a communication connection with a video capturing device in the vehicle to obtain the video stream collected by the video capturing device in real time.

For another example, when the vehicle tracking method of the embodiment of the present application is applied in a traffic management scenario to achieve the purpose of violation recognition, traffic flow statistics, etc., the server of the traffic management system can obtain the video stream collected by the monitoring device of the traffic intersection in real time.

Correspondingly, the second image may be one newly collected frame of image in the video stream collected in real time, that is, the newly collected frame of image in the video stream acquired in real time is determined as the second image.

When applied to a non-real-time vehicle tracking scenario, the given video stream data can be analyzed to determine the driving trajectory of a specific vehicle, or monitor the driving trajectory of a vehicle at a certain traffic intersection. Therefore, the vehicle tracking apparatus of the embodiment of the present application can also directly acquire a piece of video stream data that has been photographed, analyze the video stream data, and determine each frame of the video stream data as the second image in turn, or determine an image collected at a specific traffic intersection to be the second image.

the first image is a history image of the second image, and specifically is the previous N frame images adjacent to the second image in the video stream, and N is a positive integer; The value of N can be determined according to actual needs and specific application scenarios, which is not limited in the embodiment of the present application.

For example, when the vehicle tracking method of the embodiment of the present application is applied to a traffic management scenario, since the monitoring device at the traffic intersection is fixed, a relatively accurate result of the second vehicle can be obtained by only comparing with the previous one frame image adjacent to the second image, in this application scenario, the value of N can be 1.

For another example, when the vehicle tracking method of the embodiment of the present application is applied to scenarios such as vehicle automatic driving and assisted driving, the position of the video capturing device is constantly changing during driving of vehicles, and overtaking and being overtaken may occur during driving of vehicles, if only comparing with the previous one frame image adjacent to the second image, the vehicle tracking result is likely to be inaccurate. Therefore, N can be determined to be an integer greater than 1 to improve the vehicle tracking accuracy.

Each of the first image and the second image may include at least one vehicle, the first image includes at least one first vehicle, and the second image includes at least one second vehicle.

The first position information may be characterized by coordinate information of a center position of the first vehicle, or may be characterized by coordinate information of other positions of the first vehicle, such as the coordinate information of the head, which is not specifically limited here. The second position information may be characterized by coordinate information of a center position of the second vehicle, or may be characterized by coordinate information of other positions of the first vehicle, such as the position information of the head, which is not specifically limited here. In order to reduce the amount of conversion and calculation, the first position information and the second position information are usually represented by the coordinate information of a same position of the vehicles, and the first position information and the second position information described below both take being characterized by the coordinate information of the center position of the vehicle as an example for detailed description.

The coordinate information may include coordinate values in two directions perpendicular to each other, and these two directions may be referred to as an x direction and a y direction. For example, the first position information of the first vehicle in the first image may be denoted as $(x1, y1)$, and the second position information of the second vehicle in the second image may be denoted as $(x2, y2)$.

An existing or new instance segmentation network may be used to identify the first position information of the first vehicle in the first image, and identify the second position information of the second vehicle in the second image.

For example, an existing spatial embedding network may be used to identify the first position information of the first vehicle and the second position information of the second vehicle. Among them, the spatial embedding network may include an encoder network and several decoder networks. The encoder network can be used to extract the features of the first image and the second image respectively, and one of the several decoder networks can be used to predict the center position of each first vehicle in the first image and the center position of each second vehicle in the second image respectively to obtain the first position information of each first vehicle and the second position information of each second vehicle.

For another example, a new instance segmentation network may be used to identify the first position information of the first vehicle and the second position information of the second vehicle. The instance segmentation network can be reconstructed from the spatial embedding network. For example, the encoder network in the spatial embedding network is updated to an encoder network with an attention mechanism to reconstruct a new instance segmentation network.

Among them, the encoder network on the basis of the attention mechanism has similar functions to the encoder network in the spatial embedding network. Its purpose is to acquire the features of the first image to perform instance segmentation and vehicle tracking of the first vehicle in the first image, and to acquire features of the second image to perform instance segmentation and vehicle tracking of the second vehicle in the second image.

Step 102: predicting first position offset information of the second vehicle relative to the first vehicle on the basis of the first image and the second image;
In this step, the first position offset information may refer to the position offset information of a certain position of the second vehicle relative to the corresponding position of the first vehicle. In an optional implementation, the first position offset information may refer to position offset information of the center position of the second vehicle relative to the center position of the first vehicle.

The first position offset information includes coordinate offset of the center position in the x direction of each second vehicle relative to a corresponding first vehicle and coordinate offset of the center position in the y direction.

In the case that both the first image and the second image include multiple vehicles, each second vehicle in the second image needs to be associated with a first vehicle in the first image to determine the first position offset information of each second vehicle in the second image relative to the corresponding first vehicle in the first image.

There may be multiple ways to predict the first position offset information of the second vehicle relative to the first vehicle on the basis of the first image and the second image.

For example, the pixels of the second image may be compared with the pixels of the first image, and a pixel of the first image that has a similarity with the second image greater than a first preset threshold is determined. The pixel of the second image is associated with a similar pixel of the first image, and the first position offset information is determined according to the frame value between the associated pixels.

For another example, the first feature of the first image and the second feature of the second image can be acquired, and the first position offset information of the second vehicle relative to the first vehicle can be predicted on the basis of the first feature and the second feature. In the specific implementation process, a new decoder network can be constructed, which is used to associate the second vehicle of the second image with the first vehicle of the first image on the basis of the first feature and the second feature to predict the offsets of the center position of each second vehicle in the second image relative to the center position of the corresponding first vehicle in the first image in the x direction and the y direction, which are respectively denoted by dx and dy.

Step 103: determining a tracking result of the second vehicle on the basis of the first position information, the second position information, and the first position offset information.

In this step, there are two ways to track the second vehicle. The first way is to determine whether there is a first vehicle that is the same as the second vehicle in the first image on the basis of a collection position of the second image. If the first vehicle exists, the tracking is successful, if it does not exist, the tracking fails, or it is determined that the collection position of the second image is the starting point of the driving trajectory of the second vehicle.

Specifically, the coordinate value of the second position information and the coordinate value of the first position offset information can be subtracted to calculate the position information of the second vehicle before the position update in the previous frame image, and the matching of the position information before the position update and the first position information of the first vehicle in the first image is performed. If the matching is successful, it indicates that there is a first vehicle that is the same vehicle as the second vehicle in the first image, and the tracking is successful. Otherwise, the tracking fails.

The position information before the position update may be matched with the first position of the first vehicle in the first image according to the Euclidean distance between the position corresponding to the position information of the second vehicle before position update and the position corresponding to the first position information. If there is first position information having an Euclidean distance smaller than a second preset threshold, it is determined that the first vehicle corresponding to the first position information and the second vehicle are the same vehicle, and the tracking is successful.

A difference between the coordinate value of the position information before the position update of the second vehicle in the x direction and the coordinate value of the first position information in the x direction, and the coordinate value in the y direction and the coordinate value of the first position information in the y direction, may also be compared respectively, and the position information before the position update is matched with the first position information of the first vehicle in the first image. If the differences between the coordinate values in the two directions are both smaller than a third preset threshold, it is determined that the first vehicle corresponding to the first position information and the second vehicle are the same vehicle, and the tracking is successful.

For example, the first image includes two first vehicles, identified as Carl and Car2, the first position information of Carl is (110, 110), the first position information of Car2 is (200, 200), the second position information of the second vehicle is (121, 121), and the first position offset information corresponding to the second vehicle is (10, 10). The position information before the position update of the second vehicle is (111, 111). It can be seen that the position information before the position update of the second vehicle matches the first position information of Car1, and the second vehicle and Carl are the same vehicle, which is also denoted as Carl.

The second way is to determine whether there is a second vehicle that is the same vehicle as the first vehicle in the second image on the basis of a collection position of the first image. If the second vehicle exists, the tracking is successful, if it does not exist, the tracking fails, or it is determined that the collection position of the second image is the starting point of the driving trajectory of the second vehicle.

Specifically, the coordinate value of the first position information and the coordinate value of the first position offset information may be added to calculate the position information of the first vehicle after position update in the next frame image, and matching of the position information of the first vehicle after the position update and the second position information of the second vehicle in the second image is performed. If the matching is successful, it indicates that there is a second vehicle that is the same vehicle as the first vehicle in the second image, and the tracking is successful. Otherwise, the tracking fails.

For example, the first image includes two first vehicles, identified as Carl and Car2, the first position information of Carl is (110, 110), the first position information of Car2 is (200, 200), the second position information of the second vehicle is (121, 121), and the first position offset information corresponding to the second vehicle is (10, 10). The updated position information of Carl is (120, 120), and the updated position information of Car2 is (210, 210). It can be seen that the updated position information of Carl matches the second position information of the second vehicle, and the second vehicle is the same vehicle as Carl and is also denoted as Carl.

In addition, in the case where a plurality of second vehicles are included in the second image, the tracking result of each second vehicle may be determined according to the second position information, the first position offset information of each second vehicle, and the first position information of each first vehicle in the first image.

In a specific implementation process, the vehicle tracking can be completed on the basis of the first position information, the second position information, and the first position offset information, combined with the mainstream Hungarian algorithm.

In a practical application, the driving trajectory of each second vehicle can be determined according to the tracking result. For example, the second image includes vehicle A. In the case that the tracking is successful, the driving trajectory of vehicle A in the second image can be determined according to the driving trajectory of vehicle A in the first image and the collection position of the second image, and an identification of vehicle A in the first image is determined as the identification of vehicle A in the second image, and the identification of vehicle A is displayed in the second image to mark vehicle A.

Refer to FIG. 2. FIG. 2 is a schematic diagram of marking each second vehicle in the second image. As shown in FIG. 2, if the identification of vehicle A in the first image is "Carl", in the case that the tracking is successful, then the identification "Carl" of vehicle A may be displayed on the top of vehicle A in the second image.

Correspondingly, in the case that the tracking fails, it can be determined that vehicle A is a new vehicle that appears for the first time in the video stream, so that the collection position of the second image can be determined as the starting point of the driving trajectory of vehicle A and a new vehicle identification is assigned to vehicle A, and the identification of vehicle A is displayed in the second image to mark vehicle A.

In this embodiment, by predicting the first position offset information of the second vehicle relative to the first vehicle on the basis of the first image and the second image, the tracking result of the second vehicle can be determined on the basis of the identified first information of the first vehicle in the first image, the second position information of the second vehicle in the second image, and the first position offset information. Compared with the prior art, this embodiment can only be divided into one stage when implementing vehicle tracking. This stage is that the vehicle tracking is performed on the basis of the position information identified in an input image and the position offset information predicted on the basis of the input image to carry out vehicle tracking. There is no need to, during the vehicle tracking process, generate the instance segmentation result firstly, then perform feature extraction on the instance segmentation result, and vehicle tracking is performed on the basis of the extracted vehicle feature. In this way, during the vehicle tracking process, the optimization targets can be unified, and the loss of model optimization effect caused by the inconsistent optimization targets can be avoided, so that the vehicle tracking accuracy can be improved.

Optionally, the step S 102 specifically includes:

acquiring a first feature of the first image; and acquiring a second feature of the second image; predicting first position offset information of the second vehicle relative to the first vehicle on the basis of the first feature and the second feature;

In this embodiment, the first feature can represent semantic information and image texture information of the first image, and can be acquired by extracting a feature of the first image.

the second feature can represent semantic information and image texture information of the second image, and can be acquired by extracting a feature of the second image.

In a specific implementation process, feature extraction may be performed on the first image and the second image respectively on the basis of the encoder network in the spatial embedding network to obtain the first feature and the second feature.

The feature extraction may also be performed on the first image and the second image respectively using an encoder network with an attention mechanism in a newly constructed instance segmentation network to obtain the first feature combining the information of the previous and next frames and the second feature combining the information of the previous and next frames.

A decoder network may be used to predict the first position offset information of the second vehicle relative to the first vehicle on the basis of the first feature and the second feature.

The input of the decoder network is the first feature and the second feature, and the decoder network may associate each second vehicle in the second images and each first vehicle in the first image by comparing the frame value of the pixels on the basis of the first feature and the second feature, and finally the first position offset information of each second vehicle relative to the corresponding first vehicle is obtained.

For example, the second image includes vehicle A, vehicle B, and vehicle C, and the first image includes vehicle D, vehicle E, and vehicle F. The purpose of the decoder network is to associate the three vehicles in the second image with the three vehicles in the first image, such as vehicle A is associated with vehicle D, vehicle B is associated with vehicle E, vehicle C is associated with vehicle F, and finally get the first position offset information of the center position of vehicle A relative to the center position of vehicle D, the first position offset information of the center position of vehicle B relative to the center position of the vehicle E, and the first position offset information of the center position of vehicle C relative to the center position of vehicle F.

In addition, an end-to-end target model can be constructed, and the target model can be used to perform instance segmentation and vehicle tracking on the basis of the first image and the second image. End-to-end refers to that the first image and the second image are input and the tracking result may be output directly, and there is no need to first perform instance segmentation on the basis of the instance segmentation model to obtain the instance segmentation result, and then perform feature extraction on the instance segmentation result on the basis of a feature extraction model and finally perform vehicle tracking on the basis of the extracted vehicle feature.

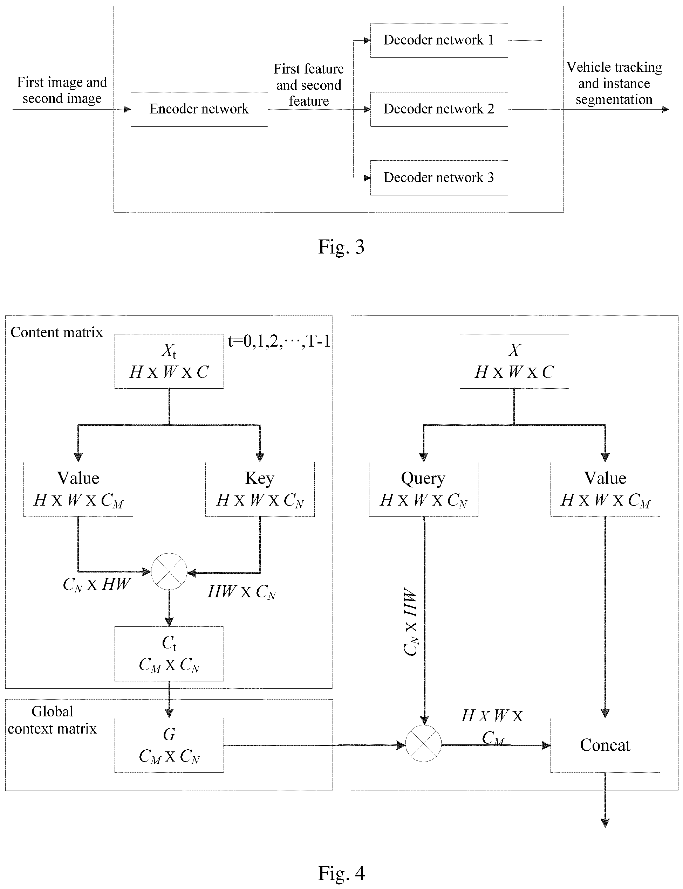

Referring to FIG. 3, which is a schematic diagram of the implementation framework of the vehicle tracking method. As shown in FIG. 3, the target model may include one encoder network, and the encoder network is used to perform feature extraction on the first image and the second image respectively to obtain the first feature and the second feature.

Wherein, the encoder network may be an encoder network in a spatial embedding network, or an encoder network with an attention mechanism replaced by an encoder network in a spatial embedding network, which is not specifically limited here.

As shown in Figure 3, the target model may further include several decoder networks. Taking three decoder networks as an example, they are decoder network 1, decoder network 2 and decoder network 3, where decoder network 1 and the decoder network 2 may be similar in structure to the decoder network in the spatial embedding network, and the decoder network 3 may be regarded as a newly added decoder network in the spatial embedding network.

The decoder network 1 can be used to predict the center position of each first vehicle in the first image on the basis of the first feature output by the encoder network, obtain the first position information of each first vehicle, and predict the center position of each second vehicle in the second image on the basis of the second feature to obtain the second position information of each second vehicle.

The decoder network 2 can be used to predict the offset of each pixel in the first image relative to the center position of each first vehicle on the basis of the first feature output by the encoder network, and predict the offset of each pixel in the second image relative to the center position of each second vehicle on the basis of the second feature.

The decoder network 3 can be used to associate the second vehicle in the second image with the first vehicle in the first image on the basis of the first feature and the second feature, and predict the offset of the center position of each second vehicle relative to the center position of the corresponding first vehicle.

Finally, on the basis of the outputs of the decoder network 1, the decoder network 2 and the decoder network 3, combined with the mainstream Hungarian algorithm, the instance segmentation and vehicle tracking of each second vehicle in the second image can be completed.

In this embodiment, the first feature of the first image and the second feature of the second image are acquired, and the first position offset information of the second vehicle relative to the first vehicle is predicted on the basis of the first feature and the second feature, in this way, the calculation amount of the position offset information can be simplified.

In addition, predicting the first position offset information of the second vehicle relative to the first vehicle on the basis of the first feature and the second feature can share the same encoder network for instance segmentation and vehicle tracking, and at the same time, a new decoder network can be added, in this way, an end-to-end target model can be constructed to perform instance segmentation and vehicle tracking for each second vehicle in the second image at the same time, so that end-to-end training can be achieved, which can further improve vehicle tracking accuracy. Optionally, acquiring a second feature of the second image includes:

> performing feature extraction on the first image to obtain a first target feature of the first image; constructing a feature enhancement matrix of the second image on the basis of the first target feature using the encoder network with an attention mechanism; wherein the feature enhancement matrix represents the feature correlation relationship of the first image and the second image; performing feature extraction on the second image to obtain a second target feature of the second image; and determining the second feature on the basis of the feature enhancement matrix and the second target feature.

In this embodiment, the second feature of the second image can be acquired on the basis of an encoder network with an attention mechanism. In the specific implementation process, the encoder network with the attention mechanism can be used as the encoder part of the partial embedding network to replace the original encoder network.

Specifically, referring to FIG. 4, FIG. 4 is a schematic structural diagram of an encoder network with an attention mechanism. As shown in FIG. 4, the encoder network may include two parts. The left part is mainly the feature enhancement matrix that updates the second image on the basis of the feature of history images, i.e. a global context matrix, and the global context matrix represents the feature correlation relationship between the history image and the second image. The right part is to determine the second feature on the basis of the feature of the second image and the feature enhancement matrix.

Specifically, the first image is a history image relative to the second image, and feature extraction may be performed on the first image to obtain the first target feature of the first image, and then the left part may generates a content matrix of the first image on the basis of the first target feature of the first image, on the basis of the attention mechanism, and the generation of the content matrix is shown in formula (1).

$$C_t = k(X_t)^T v(X_t) \quad (1)$$

Wherein, $C_t$ is the content matrix of the current frame image, and at the current moment, the current frame image refers to the first image, and therefore $X_t$ refers to the first target feature, and $k$ and $\upsilon$ is the channel function of the two dimensions of M and N, respectively.

Updating the global context matrix, as shown in formula (2).

$$G_t = \frac{t-1}{t}G_{t-1} + \frac{1}{t}C_t \quad (2)$$

Among them, $G_t$ is the updated global context matrix. It can be seen that as time accumulates, it incorporates the characteristics of history images.

Subsequently, as time changes in the time dimension, the current frame image is the second image, and the second feature of the second image can be calculated according to the accumulation of the content matrix in the time dimension, as shown in formula (3).

$$D_t = q(X_t)G_{t-1} \quad (3)$$

Where $D_t$ is the second feature of the second image, $X_t$ is the second target feature of the second image, $G_{t-1}$ is the feature enhancement matrix of the second image, and $q$ is a one-dimensional channel function.

After that, on the basis of the second target feature, the global context matrix update is continued. In this embodiment, a global attention mechanism is introduced, and the relationship between the previous and next frames is modeled using the global attention mechanism, and the second image is feature-enhanced on the basis of the features of the history image, and finally the second feature combining the features of the history image, thereby the accuracy of instance segmentation and vehicle tracking is further improved.

Optionally, the first image includes at least two first vehicles, and the step S 102 specifically includes:

determining third position information of the second vehicle on the basis of the second position information and the first position offset information;
in the case that a target vehicle exists in the at least two first vehicles, determining that the second vehicle and the target vehicle a the same vehicle; wherein the target vehicle is the first vehicle of which the first position information and the third position information matches;
in the case that the target vehicle does not exist in the at least two first vehicles, determining that the collection position of the second image is the starting point of the driving trajectory of the second vehicle.

In this embodiment, the coordinate value of the second position information and the coordinate value of the first position offset information may be subtracted to calculate the third position information of the second vehicle, and the third position information may be the position information of the second vehicle before the position update in the previous frame image.

The third position information is matched with the first position information of the first vehicle in the first image. If the matching is successful, it indicates that the target vehicle exists in the at least two first vehicles, and it is determined that the second vehicle and the target vehicle are the same vehicle, and the tracking is successful; otherwise, the tracking fails.

The third position information may be matched with the first position information of the first vehicle in the first image according to the Euclidean distance between the position corresponding to the third position information and the position corresponding to the first position information.

If there is first position information having an Euclidean distance smaller than a second preset threshold, it is determined that the first vehicle corresponding to the first position information and the second vehicle are the same vehicle, and the tracking is successful.

A difference between the coordinate value of the third position information in the x direction and the coordinate value of the first position information in the x direction, and a difference between the coordinate value in the y direction and the coordinate value of the first position information in the y direction, may also be compared respectively, and the third position information is matched with the first position information of the first vehicle in the first image. If the differences between the coordinate values in the two directions are both smaller than a third preset threshold, it is determined that the first vehicle corresponding to the first position information i.e. the target vehicle, and the second vehicle are the same vehicle, and the tracking is successful.

For example, the first image includes two first vehicles, identified as Carl and Car2, the first position information of Carl is (110, 110), the first position information of Car2 is (200, 200), the second position information of the second vehicle is (121, 121), and the first position offset information corresponding to the second vehicle is (10, 10). The third position information determined on the basis of the second position information and the first position offset information is (111, 111). It can be seen that the coordinate value of the third position information in the x direction is similar to the first position information of Carl in the x direction, and the coordinate value of the third position information in the y direction is similar to the coordinate value of the first position information of Carl in the y direction. Therefore, the third position information matches the first position information of Carl, and the second vehicle is the same vehicle as Carl and is also denoted as Carl.

In addition, if the matching fails, the first vehicle that is the same vehicle as the second vehicle does not exist in the first image. At this time, the collection position of the second image can be determined as the starting point of the driving trajectory of the second vehicle.

In this embodiment, the third position information of the second vehicle before the position update in the previous frame of image is calculated, and the third position information is matched with the first position information of each first vehicle in the first image to determine whether there is a target vehicle in the first image where there are multiple first vehicles, so that multi-target tracking can be realized.

Optionally, the tracking result includes the tracking identifier of the second vehicle, and after step S 101, it further includes:

> identifying second position offset information of each pixel in the second image relative to the second vehicle;
> determining an instance segmentation result of the second vehicle on the basis of the second position information and the second position offset information;
> determining a tracking identifier of the second vehicle on the basis of the instance segmentation result.

In this embodiment, in addition to implementing vehicle tracking, instance segmentation can also be implemented, so that vehicle identification can be performed during the vehicle tracking process. Specifically, the decoder network 2 shown in FIG. 3 can be used to predict the second position offset information of each pixel in the second image relative to the second vehicle on the basis of the second feature of the second image.

And on the basis of the second position information and the second position offset information, an instance segmentation result of the second vehicle is determined. Specifically, a pixel where the offset corresponding to the second position offset information form the center position of the second vehicle is smaller than the fourth preset threshold may be determined as a pixel of the second vehicle, and finally a mask of the second vehicle may be obtained, the mask may characterize the pixel range of the second vehicle in the second image, that is, the instance segmentation result of the second vehicle.

After that, the tracking identifier of the second vehicle may be determined on the basis of the mask, and the tracking identifier may include the mask and the identifier of the second vehicle, as shown in FIG. 2.

In this embodiment, while vehicle tracking is performed, instance segmentation may also be performed to better perform vehicle identification during the vehicle tracking process and improve the effect of vehicle tracking.

Second Embodiment

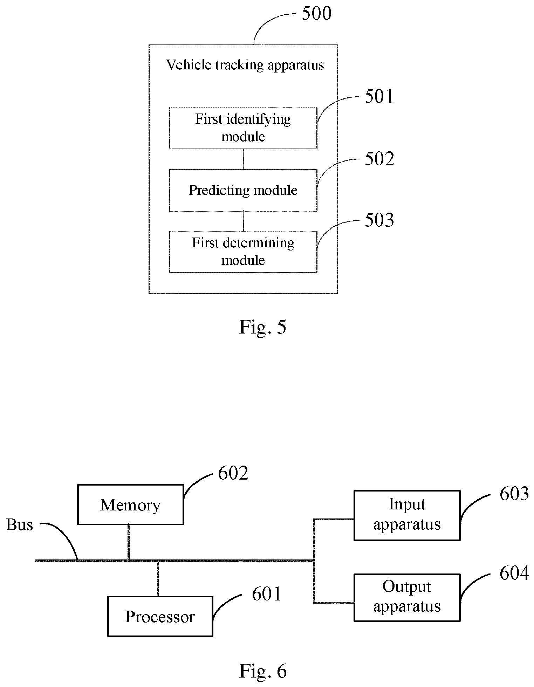

As shown in FIG. 5, the present application provides a vehicle tracking apparatus 500, including: a first identifying module 501 configured to identify first position information of a first vehicle in a first image of a video stream collected during driving of vehicles, and second position information of a second vehicle in a second image of the video stream; wherein, the first image is the previous N frame images adjacent to the second image in the video stream, and N is a positive integer;

> a predicting module 502 configured to predict first position offset information of the second vehicle relative to the first vehicle on the basis of the first image and the second image;
> a first determining module 503 configured to determine a tracking result of the second vehicle on the basis of the first position information, the second position information, and the first position offset information.

Optionally, wherein the predicting module 502 includes:

> a first acquiring unit, configured to acquire a first feature of the first image;
> a second acquiring unit, configured to acquire a second feature of the second image;
> a predicting unit, configured to predict first position offset information of the second vehicle relative to the first vehicle on the basis of the first feature and the second feature.

Optionally, the second acquiring unit is specifically configured to perform feature extraction on the first image to obtain a first target feature of the first image; construct a feature enhancement matrix of the second image on the basis of the first target feature using an encoder network with an attention mechanism; wherein the feature enhancement matrix represents the feature correlation relationship of the first image and the second image; perform feature extraction on the second image to obtain a second target feature of the second image; and determine the second feature on the basis of the feature enhancement matrix and the second target feature.

Optionally, the first image includes at least two first vehicles, and the first determining module 503 includes:

> a first determining unit configured to determine third position information of the second vehicle on the basis of the second position information and the first position offset information;
> a second determining unit configured to, in the case that a target vehicle exists in the at least two first vehicles, determine that the second vehicle and the target vehicle a the same vehicle; wherein the target vehicle is the first vehicle that the first position information and the third position information matches;
> a third determining unit configured to, in the case that the target vehicle does not exist in the at least two first vehicles, determine that the collection position of the second image is the starting point of the driving trajectory of the second vehicle.

Optionally, the tracking result includes the tracking identifier of the second vehicle, and the apparatus further includes:

a second identifying module configured to identify second position offset information of each pixel in the second image relative to the second vehicle;
a second determining module configured to determine an instance segmentation result of the second vehicle on the basis of the second position information and the second position offset information;
a third determining module configured to determine a tracking identifier of the second vehicle on the basis of the instance segmentation result.

The vehicle tracking apparatus 500 provided in the present application can implement the various processes implemented in the foregoing vehicle tracking method embodiments, and can achieve the same beneficial effects. To avoid repetition, details are not described herein again.

According to the embodiments of the present application, the present application further provides an electronic device and a readable storage medium.

As shown in FIG. 6, it is a flowchart of an electronic device of the method according to an embodiment of the present application. The electronic device is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital processing, cellular phones, intelligent phones, wearable devices, and other similar computing devices. The components shown here, their connections and relationships, and their functions are merely for illustration, and are not intended to be limiting implementations of the disclosure described and/or required herein.

As shown in FIG. 6, the electronic device includes: one or more processors 601, a memory 602, and interfaces for connecting various components, including a high-speed interface and a lowspeed interface. The various components are interconnected using different buses and may be mounted on a common motherboard or otherwise installed as required. The processor may process instructions executed within the electronic device, wherein the instructions executed within the electronic device includes those instructions stored in or on a memory for displaying graphic information of a graphical user interface (GUI) on an external input/output device, such as a display device coupled to the interface. In other implementations, multiple processors and/or multiple buses may be used with multiple memories and multiple storages, if desired. Similarly, multiple electronic devices may be connected, each providing some necessary operations (for example, as a server array, a group of blade servers, or a multiprocessor system). One processor 601 is shown as an example in FIG. 6.

The memory 602 is a non-transitory computer-readable storage medium provided by the present application. The memory stores instructions executable by at least one processor, so that the at least one processor executes the vehicle tracking method provided in the present application. The non-transitory computer-readable storage medium of the present application stores computer instructions, which are used to cause a computer to execute the vehicle tracking method provided by the present application.

As a non-transitory computer-readable storage medium, the memory 602 may be used to store non-transitory software programs, non-transitory computer executable programs, and modules, such as a program instruction/module/unit (for example, the first identifying module 501, second predicting module 502, and the first determining module 503 shown in FIG. 5) corresponding to the vehicle tracking method in embodiments of the present application. The processor 601 executes various functional applications and data processing of the server by running non-transitory software programs, instructions, and modules stored in the memory 602, that is, the vehicle tracking method in embodiments of the foregoing method is implemented.

The memory 602 may include a program storage partition and a data storage partition, where the program storage partition may store an operating system and an application program required for at least one function, and the data storage partition may store data created for use by the electronic device of the method according to an embodiment of the present application. In addition, the memory 602 may include a high-speed random-access memory, and may also include a non-transitory memory, such as at least one magnetic disk storage device, a flash memory device, or other non-transitory solid-state storage device. In some embodiments, the memory 602 may optionally include a memory remotely disposed with respect to the processor 601, and the remote memory may be connected through a network to the electronic device of the vehicle tracking method. Examples of the above network include, but are not limited to, the Internet, an Intranet, a local area network, a mobile communication network and combinations thereof.

The electronic device of the method in the embodiments of the present application may further include an input apparatus 603 and an output apparatus 604. The processor 601, the memory 602, the input apparatus 603, and the output apparatus 604 may be connected via a bus or other means. FIG. 6 has illustrated a connection via a bus as an example.

The input apparatus 603 can receive inputted numeric or character information, and generate a key signal input related to a user setting and function control of an electronic device for the method according the embodiments of the present application, such as a touch screen, a keypad, a mouse, a trackpad, a touchpad, a pointing stick, one or more mouse buttons, a trackball, a joystick or the like. The output apparatus 604 may include a display apparatus, an auxiliary lighting apparatus (e.g., an LED), a haptic feedback apparatus (e.g., a vibration motor) and the like. The display apparatus may include, but is not limited to, a liquid crystal display (LCD), a light emitting diode (LED) display, and a plasma display. In some embodiments, the display apparatus may be a touch screen.

Various implementations of the systems and technologies described herein may be implemented in a digital electronic circuitry, an integrated circuit system, an application-specific integrated circuit (ASIC), computer hardware, firmware, software, and/or combinations thereof. These various embodiments may include: implementations in one or more computer programs, which can be executed by and/or interpreted on a programmable system including at least one programmable processor, the programmable processor may be application specific or general-purpose and can receive data and instructions from a storage system, at least one input apparatus and/or at least one output apparatus, and can transmit the data and instructions to the storage system, the at least one input apparatus, and the at least one output apparatus.

These computing programs (also known as programs, software, software applications or codes) include machine instructions of a programmable processor, and can be implemented using highlevel procedures and/or object-oriented programming languages, and/or assembly/machine languages. As used herein, the terms "machine-readable medium" and "computer-readable medium" both refer to any computer program product, apparatus, and/or apparatus (e.g., a magnetic disk, an optical disk, a memory, a programmable logic device (PLD)) used to provide the machine instructions and/or data to a programmable processor, including machine-readable media that receive machine instructions as machine-readable signals. The term "machine-readable signal" refers to any signal used to provide machine instructions and/or data to a programmable processor.

To provide interaction with the user, the systems and technologies described herein can be implemented on a computer that has: a display apparatus (e.g., a cathode ray tube (CRT) or liquid crystal display (LCD) monitor) for displaying information to the user; and a keyboard and a pointing apparatus (e.g., a mouse or a trackball) through which the user can provide input to the computer. Other kinds of apparatuses may also be used to provide interaction with the user. For example, the feedback provided to the user may be any form of sensory feedback (e.g., a visual feedback, an auditory feedback, or a haptic feedback), and may be in any form (including an acoustic input, a voice input, or a haptic input) to receive input from the user.

The systems and technologies described herein can be implemented in a computing system that includes a back-end component (e.g., as a data server), or a middleware components (e.g., an application server), or a front-end component (e.g., a user computer with a graphical user interface or web browser through which the user can interact with the implementation of the systems and technologies described herein), or any combination of such back-end component, middleware component or front-end component. Various components of the system may be interconnected by digital data communication in any form or via medium (e.g., a communication network). Examples of a communication network include: a local area network (LAN), a wide area network (WAN) and the Internet.

The computer system may include a client and a server. The client and server are typically remote from each other and interact via a communication network. The client-server relationship is created by computer programs running on respective computers and having a client-server relationship with each other. The server can be a cloud server, also known as a cloud computing server or a cloud host, which is a host product in the cloud computing service system to solve defects of difficult management and weak business scalability in the traditional physical host and VPS service ("Virtual Private Server", or "VPS" for short).

In this embodiment, by predicting the the first position offset information of the second vehicle relative to the first vehicle on the basis of the first image and the second image, the tracking result of the second vehicle can be determined on the basis of the identified first information of the first vehicle in the first image, the second position information of the second vehicle in the second image, and the first position offset information. Compared with the prior art, this embodiment can only be divided into one stage when implementing vehicle tracking. This stage is that the vehicle tracking is performed on the basis of the position information identified in an input image and the position offset information predicted on the basis of the input image to carry out vehicle tracking. There is no need to, during the vehicle tracking process, generate the instance segmentation result firstly, then perform feature extraction on the instance segmentation result, and vehicle tracking is performed on the basis of the extracted vehicle feature. In this way, during the vehicle tracking process, the optimization targets can be unified, and the loss of model optimization effect caused by the inconsistent optimization targets can be avoided, so that the vehicle tracking accuracy can be improved. Therefore, according to the technical solution of the embodiment of the present application, the problem of low vehicle tracking accuracy in the vehicle tracking technology is well solved.

It should be understood that the various forms of processes shown above may be used, and steps may be reordered, added or removed. For example, various steps described in the present application can be executed in parallel, in sequence, or in alternative orders. As long as the desired results of the technical solutions disclosed in the present application can be achieved, no limitation is imposed herein.

The foregoing specific implementations do not constitute any limitation on the protection scope of the present application. It should be understood by those skilled in the art that various modifications, combinations, sub-combinations and substitutions may be made as needed by design requirements and other factors. Any and all modification, equivalent substitution, improvement or the like within the spirit and concept of the present application shall fall within the protection scope of the present application.

**Claims**

1. A vehicle tracking method, comprising:

   identifying first position information of a first vehicle in a first image of a video stream collected during driving of vehicles; and identifying second position information of a second vehicle in a second image of the video stream; wherein, the first image is the previous N frame images adjacent to the second image in the video stream, N is a positive integer;
   predicting first position offset information of the second vehicle relative to the first vehicle on the basis of the first image and the second image;
   determining a tracking result of the second vehicle on the basis of the first position information, the second position information and the first position offset information.

2. The method according to claim 1, wherein, the predicting first position offset information of the second vehicle relative to the first vehicle on the basis of the first image and the second image comprises:

   acquiring a first feature of the first image; and acquiring a second feature of the second image;
   predicting first position offset information of the second vehicle relative to the first vehicle on the basis of the first feature and the second feature.

3. The method according to claim 2, wherein the acquiring the second feature of the second image, comprises:

   performing feature extraction on the first image to obtain a first target feature of the first image;
   constructing a feature enhancement matrix of the second image on the basis of the first target feature using the encoder network with an attention mechanism; wherein the feature enhancement matrix represents the feature correlation relationship of the first image and the second image;

   performing feature extraction on the second image to obtain a second target feature of the second image; and determining the second feature on the basis of the feature enhancement matrix and the second target feature.

4. The method according to claim 1, wherein, the first image comprises at least two first vehicles, the determining the tracking result of the second vehicle on the basis of the first position information, the second position information and the first position offset information comprises:

   determining third position information of the second vehicle on the basis of the second position information and the first position offset information;
   in a case that a target vehicle exists in the at least two first vehicles, determining that the second vehicle and the target vehicle are the same vehicle; wherein the target vehicle is the first vehicle of which the first position information and the third position information matches;
   in a case that no target vehicle exist in the at least two first vehicles, determining that the collection position of the second image is the starting point of the driving trajectory of the second vehicle.

5. The method according to claim 1, wherein, the tracking result comprises a tracking identifier of the second vehicle, and after identifying second position information of the second vehicle in a second image of the video stream, the method further comprises:

   identifying second position offset information of each pixel in the second image relative to the second vehicle;
   determining an instance segmentation result of the second vehicle on the basis of the second position information and the second position offset information;
   determining a tracking identifier of the second vehicle on the basis of the instance segmentation result.

6. A vehicle tracking apparatus, comprising:

   a first identifying module, configured to identify first position information of a first vehicle in a first image of a video stream collected during driving of vehicles, and second position information of a second vehicle in a second image of the video stream; wherein, the first image is the previous N frame images adjacent to the second image in the video stream, N is a positive integer;
   a predicting module, configured to predict first position offset information of the second vehicle relative to the first vehicle on the basis of the first image and the second image;

a first determining module, configured to determine a tracking result of the second vehicle on the basis of the first position information, the second position information and the first position offset information.

7. The apparatus according to claim 6, wherein, the predicting module comprises:

a first acquiring unit, configured to acquire a first feature of the first image;

a second acquiring unit, configured to acquire a second feature of the second image;

a predicting unit, configured to predict first position offset information of the second vehicle relative to the first vehicle on the basis of the first feature and the second feature.

8. The apparatus according to claim 7, wherein, the second acquiring unit is configured to perform feature extraction on the first image to obtain a first target feature of the first image; construct a feature enhancement matrix of the second image on the basis of the first target feature using an encoder network with an attention mechanism; wherein the feature enhancement matrix represents the feature correlation relationship of the first image and the second image; perform feature extraction on the second image to obtain a second target feature of the second image; and determine the second feature on the basis of the feature enhancement matrix and the second target feature.

9. The apparatus according to claim 6, wherein, the first image comprises at least two first vehicles, and the first determining module comprises:

a first determining unit configured to determine third position information of the second vehicle on the basis of the second position information and the first position offset information;

a second determining unit configured to, in a case that a target vehicle exists in the at least two first vehicles, determine that the second vehicle and the target vehicle are the same vehicle; wherein the target vehicle is the first vehicle of which the first position information and the third position information matches;

a third determining unit configured to, in a case that no target vehicle exist in the at least two first vehicles, determine that the collection position of the second image is the starting point of the driving trajectory of the second vehicle.

10. The apparatus according to claim 6, wherein, the tracking result comprises the tracking identifier of the second vehicle, and the apparatus further comprises:

a second identifying module, configured to identify second position offset information of each pixel in the second image relative to the second vehicle;

a second determining module, configured to determine an instance segmentation result of the second vehicle on the basis of the second position information and the second position offset information;

a third determining module, configured to determine a tracking identifier of the second vehicle on the basis of the instance segmentation result.

11. An electronic device, comprising

at least one processor; and
a memory communicatively connected with the at least one processor; wherein, the memory stores instructions executable by the at least one processor, and the instructions are executed by the at least one processor to cause the at least one processor execute the method according to any one of claims 1 to 5.

12. A non-transitory computer readable storage medium, storing thereon computer instructions that are used to cause a computer to execute the method according to any one of claims 1 to 5.

13. A computer program product, comprising a computer program, wherein the computer program is configured to be executed by a processor, to implement the method according to any one of claims 1 to 5.

101

Identifying first position information of a first vehicle in a first image of a video stream collected during driving of vehicles; and identifying second position information of a second vehicle in a second image of the video stream

102

Predicting first position offset information of the second vehicle relative to the first vehicle on the basis of the first image and the second image

103

Determining a tracking result of the second vehicle on the basis of the first position information, the second position information and the first position offset information

Fig. 1

Fig. 2

Fig. 3

Fig. 4

500

Vehicle tracking apparatus

First identifying module ⟋ 501

Predicting module ⟋ 502

First determining module ⟋ 503

Fig. 5

Bus

Memory ⟋ 602

Input apparatus ⟋ 603

Output apparatus ⟋ 604

Processor ⟋ 601

Fig. 6